# EUROPÄISCHE PATENTANMELDUNG

(11) **EP 0 542 676 A1**
(43) Veröffentlichungstag der Anmeldung: **19.05.1993**
(21) Anmeldenummer: 92810828.1
(22) Anmeldetag: 27.10.1992
(51) Int. Cl.: H01J 9/50

(54) **Verfahren und Anlage zum Entsorgen von Bildröhren (Kathodenstrahlröhren)**

(30) Priorität: 13.11.1991 CH 3307/91
(71) Anmelder: ENVIRO EC AG, CH-6300 Zug (CH)
(72) Erfinder: Alavi,Kamal, CH-6318 Walchwil (CH)
(74) Vertreter: OK pat AG

(57) **Zusammenfassung**

Zur Entsorgung anfallende Bildröhren (10) werden in einer Demontagestation (20) von aussen am Glaskolben befindlichen Bestandteilen (18, 19) befreit, und der Pumpstutzen (2) wird geöffnet. Kolbenhals mit Elektrodenteil werden abgetrennt. In einer Kolben-Trennstation (22) werden die Glaskolben (10′) in einen Trichterteil (6) und einen Frontteil (8) getrennt. In mindestens einer Behandlungsstation (24, 26) sind Mittel vorhanden, um die am Trichterteil (6) und am Frontteil (8) anhaftenden Beschichtungsmaterialien separat mechanisch abzutragen und zu sammeln.

## Beschreibung

Bildröhren (Kathodenstrahlröhren) finden als Monochrom- oder Farbbildröhren in mancherlei elektronischen Geräten sehr verbreitete Anwendung, seit längerer Zeit vor allem in Fernsehgeräten und Computer-Monitoren, aber auch in zahlreichen anderen Geräten zur Bild-, Daten- oder Signalwiedergabe. Entsprechend der Verbreitung solcher Geräte ergibt sich auch ein grosser und stets zunehmender Anfall von defekten, "ausgebrannten" oder veralteten Bildröhren, zudem muss auch bei der Bildröhren-Herstellung mit Ausschuss gerechnet werden.

Bildröhren enthalten - neben dem Hauptbestandteil Glas - eine grössere Zahl von chemischen Elementen und Verbindungen (insbesondere Metallelektroden und ggf. Farbmaske, innere und äussere Abschirm-Beschichtungen, Leuchtstoff-Beschichtung) die zum Teil giftig bzw. umweltschädigend sind (insbesondere Schwermetall-Gehalt). Es ist deshalb weitgehend anerkannt, dass solche Bildröhren als Sondermüll gelten müssen und nicht unkontrolliert deponiert und zerstört werden dürfen. Das geordnete Entsorgen der in grossen Stückzahlen anfallenden Bildröhren ist zum dringenden Abfallproblem geworden.

Aufgabe der Erfindung ist es, ein Verfahren zur zweckmässigen und rationellen Entsorgung von Bildröhren (Kathodenstrahlröhren) vorzuschlagen; unter "Entsorgung" ist dabei zu verstehen, dass einerseits die verschiedenen Bestandteile bzw. Materialien der verarbeiteten Bildröhren weitgehend getrennt und vollständig erfasst werden, um sie einer Wiederverwendung zuführen zu können, und dass anderseits auch die zur Anwendung gelangenden Verfahrensschritte selbst möglichst umweltverträglich sind.

Das erfindungsgemässe Verfahren, mit dem diese Aufgabe gelöst wird, ist dadurch gekennzeichnet, dass, nach Demontage von ausserhalb des Glaskolbens befindlichen Bestandteilen und Oeffnen des Pumpstutzens,
- der Kolbenhals mit dem Elektrodenteil abgetrennt wird,
- der Glaskolben in einer zur Röhrenachse senkrechten Ebene in einen Frontteil und einen Trichterteil getrennt wird, und
- die am Frontteil und am Trichterteil anhaftenden Beschichtungsmaterialien separat mechanisch abgetragen und gesammelt werden.

Ein solches Verfahren ist gleichermassen auf verschiedene Bildröhren-Typen (insbesondere Monochrom- und Farbbildröhren) anwendbar, unabhängig von deren unterschiedlichem Aufbau und verschiedener Zusammensetzung der Beschichtungsmaterialien. Sämtliche Schritte des Verfahrens können vollständig "trocken" sein, d.h. es werden normalerweise keine (agressiven oder giftigen) Bäder bzw. Behandlungsflüssigkeiten benötigt, die mit den Materialkomponenten der Bildröhren vermengt würden. Frontteil und Trichterteil des Röhrenkolbens, häufig aus verschiedenen Glassorten gefertigt, fallen getrennt an und können entsprechend getrennt eingeschmolzen werden, jedoch kommt auch eine Wiederverwendung der Glas-Formteile bei der Produktion neuer Bildröhren in Betracht. Vor allem vorteilhaft ist auch, dass die Beschichtungsmaterialien beider Kolbenteile, die völlig verschieden in ihrer Zusammensetzung und Giftigkeit sind, getrennt erfasst und dadurch zweckentsprechend wiederverwertet werden können.

Die Erfindung betrifft ferner eine Anlage zur Durchführung des vorgenannten Entsorgungsverfahrens. Eine solche Anlage ist gekennzeichnet durch eine Bildröhren-Demontagestation, eine Kolben-Trennstation mit Mitteln zum Trennen von Frontteil und Trichterteil der Bildröhrenkolben, und mindestens eine Behandlungsstation mit Mitteln zur getrennten mechanischen Materialabtragung an den genannten Kolbenteilen.

Nachstehend wird die Erfindung anhand von Ausführungsbeispielen in Verbindung mit der Zeichnung näher erläutert. Es zeigen:
Fig. 1 den generellen Aufbau einer Bildröhre mit ihren Hauptbestandteilen,
Fig. 2 rein schematisch die einzelnen Stationen einer beispielsweisen Bildröhren-Entsorgungsanlage,
Fig. 3 einen beispielsweisen Aufbau einer Kolben-Trennstation, schematisch von der Seite gesehen, und
Fig. 4 die Situation an einer Glastrennstelle nach Fig. 3, von oben gesehen und in etwas grösserem Massstab gezeichnet.

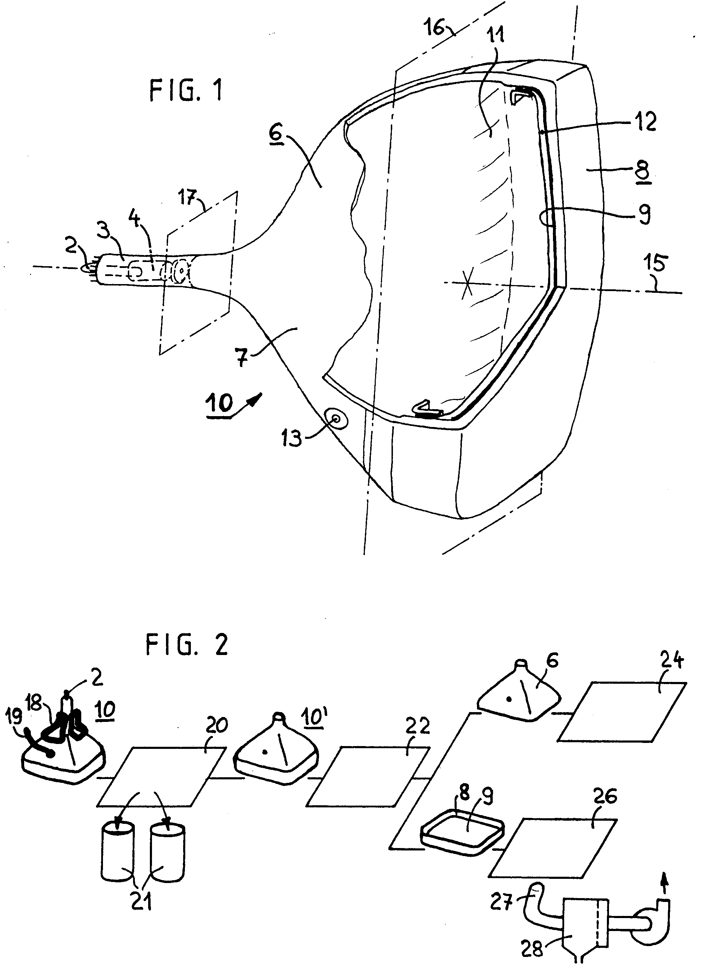

Die mit teilweise aufgeschnittenem Glaskolben dargestellte Bildröhre 10 nach Fig. 1 weist typischerweise einen Trichterteil 6 ("Konus") und einen Frontteil 8 (Bildschirmteil) auf. Am hinteren Ende des Trichterhalses 3 befindet sich der Pumpstutzen 2, welcher bei der Röhrenherstellung nach dem Evakuieren des Kolbens zugeschmolzen wird. Im Inneren des Halses 3 ist der Elektrodenteil 4 für die Strahlerzeugung und -Fokussierung angeordnet. Diesem vorgelagert, im Uebergangsbereich zwischen Hals und Konus, sind üblicherweise Ablenkspulen aussen am Kolben montiert (hier nicht dargestellt). Weiter vorn am Konus befindet sich ein Hochspannungsanschluss 13.

Der Trichterteil 6 ist aussen mit einer Beschichtung 7 versehen, normalerweise bestehend aus Graphit und z.B. Polyvinylazetat (PVA) als Bindemittel. Eine Innenbeschichtung 11 des Trichterteils enthält meist zusätzliche Komponenten wie Eisenoxid Fe₂O₃, Schwermetalle und z.B. Wasserglas als Bindemittel. Der Frontteil B ist innen mit der Leuchtschicht 9 aus elektrolumineszierenden Materialien (auch "Phosphor" genannt) und einer metallischen Reflexionsschicht, insbesondere aus Zink, versehen. Bei Farbbildröhren befindet sich hinter der Leuchtschicht 9 eine Maske 12 aus fein gelochtem Eisenblech. Die Beschichtungen 7, 9 und 11 - jedenfalls die Leuchtschicht 9 - können sich in ihrer Zusammensetzung bei Monochrom- und bei Farbbildröhren erheblich unterscheiden.

Während der Glaskolben von Monochrom-Bildröhren normalerweise aus einer einheitlichen Glassorte einteilig hergestellt ist, bestehen Frontteil und Trichterteil von Farbbildröhren aus verschiedenen Glassorten, und die einzeln gefertigten Teile 6 und 8 sind dann an ihren Rändern dicht miteinander verbunden, vorzugsweise mit einer sogenannten Fritte verklebt.

In Fig. 1 sind noch die Bildröhren-Längsachse 15 sowie zwei zu ihr senkrechte Ebenen 16 und 17, die bei der nachfolgenden Erläuterung des Entsorgungsverfahrens eine Rolle spielen, strichpunktiert eingezeichnet.

Ein Beispiel des Entsorgungsverfahrens und einer zu dessen Durchführung dienenden Anlage ist insgesamt in Fig. 2 schematisch veranschaulicht. Die zur Verarbeitung (Entsorgung) anfallenden Bildröhren 10 gelangen zuerst auf eine Bildröhren-Demontagestation 20. Diese weist einen oder mehrere entsprechend eingerichtete Arbeitsplätze auf. Vorzugsweise wird zuerst der Pumpstutzen 2 geöffnet, so dass der evakuierte Glaskolben sich mit Luft füllt, wodurch die Gefahr einer Implosion bei den nachfolgenden Verarbeitungsschritten behoben ist. Auf der Station 20 werden sodann alle äusseren Bestandteile, wie z.B. Fokussierspulen 18, Hochspannungskabel 19, Montagerahmen (nicht dargestellt) usw. demontiert, und der Trichterhals 3 mit dem Elektrodenteil wird vom Kolben abgetrennt, vorzugsweise in einer Ebene 17 (Fig. 1) im Bereich des vorderen Endes der Elektroden. Solche demontierten Teile werden, nach Materialien getrennt, gesammelt, wie mit den Behältern 21 angedeutet ist. Mit dem Elektrodenteil 4 allenfalls verbundenes Gettermaterial, z.B. metallisches Barium und/oder Barium-Verbindungen, wird abgetrennt und separat erfasst. Im übrigen können die abgetrennten Teile 3, 4 (Glas und Metallelektroden) mit Vorteil nach einem Verfahren weiterverarbeitet werden, wie es in der Europäischen Patentanmeldung EP-A 0 418 194 beschrieben ist. - Alternativ kann das Abtrennen des Hals- und Elektrodenteils auch später in der Glastrennstation 22 vorgenommen werden.

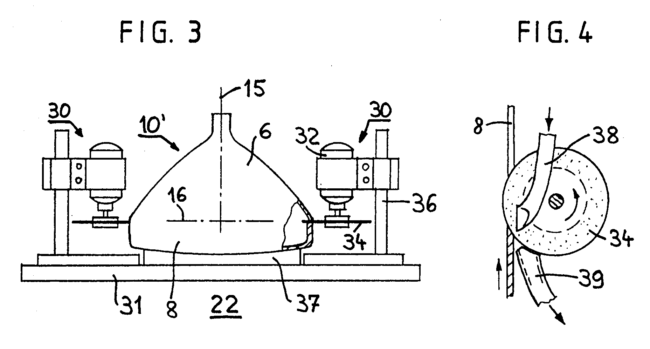

Die in der Bildröhren-Demontagestation 20 vorbereiteten Bildröhren 10′ gelangen anschliessend in die Kolben-Trennstation 22. In dieser erfolgt mit Hilfe mindestens einer Glasschneidevorrichtung die Trennung der Glaskolben in einen Frontteil 8 und einen Trichterteil 6, und zwar in einer zur Röhrenachse 15 senkrechten Ebene 16. Nähere Einzelheiten hierüber und eine besonders geeignete Anordnung mit zwei Glasschneidevorrichtungen 30 werden weiter unten anhand der Figuren 3 und 4 erläutert. Die Trennebene 16 befindet sich also im Uebergangsbereich zwischen Trichterteil 6 und Frontteil 8; im Falle von Bildröhren, bei denen diese Teile aus unterschiedlichen Glassorten bestehen (insbesondere Farbbildröhren), wird die Trennebene 15 zweckmässigerweise exakt mit der "Nahtstelle" zwischen den Teilen 6 und 8 in Uebereinstimmung gebracht. Bei der letztgenannten Art von Bildröhren ist es indessen auch möglich, die Teile 6 und 8 durch anderweitige Zerstörung der sie verbindenden Klebstoffschicht (Fritte) voneinander zu trennen, insbesondere durch Auflösen des Klebstoffes in einem geeigneten Flüssigkeitsbad (nicht dargestellt). Dabei wird darauf geachtet, dass die den Klebstoff angreifende Badflüssigkeit nicht in das Innere des Kolbens eindringt und nur von aussen einwirkt, um die (nachher zu entfernenden) Innenbeschichtungen trocken zu halten. Es hat sich gezeigt, dass übliche Fritten - eine Mischung z.B. aus (überwiegend) PbO mit BaO, ZnO und SiO₂ - in einem Bad von verdünnter Salpetersäure HNO₃ (10 %), unterstützt durch Ultraschall-Einwirkung, nach etwa 3 Minuten soweit gelöst bzw. aufgeweicht sind, dass die Kolbenteile leicht getrennt werden können. Das Säurebad kann von Zeit zu Zeit nach bekannten Methoden, z.B. mittels Elektrolyse, regeneriert werden.

Die in der Station 22 voneinander getrennten Kolbenteile 6 und 8 gelangen sodann (beim Beispiel nach Fig. 2) in je eine eigene Behandlungsstation 24 bzw. 26. In diesen Stationen werden die an den Glasteilen anhaftenden, oben erwähnten Beschichtungen 7, 11 bzw. 9 separat mechanisch abgetragen und gesammelt.

Zum Abtragen der Aussenschicht 7 wie auch der Innenschicht 11 vom Trichterteil 6 eignet sich vorzugsweise eine selektive Beaufschlagung mit einem Strahlmittel. Wie sich gezeigt hat, sind als Strahlmittel insbesondere Eisenoxid-(Fe₂O₃)- oder Glas-Partikel von ca. 0,1 - 0,3 mm Durchmesser geeignet. Diese werden in einem relativ "weichen" Luftstrom von z.B. 3 bar auf die Werkstücke gerichtet. Mit beispielsweise je vier Düsen aussen und innen und einer Luftmenge von etwa 0,9 m³/min. erfolgt ein Schichtabtrag bei sich um ihre Achse drehenden Trichterteilen während einer Umdrehung in etwa 15 Sekunden. Bei selektivem mechanischem Materialabtrag (Abrasion) in der genannten Weise bleibt die Glasoberfläche der Kolbenteile praktisch unverletzt. Die Behandlung kann in an sich bekannten Strahlkabinen (nicht dargestellt) erfolgen, wobei das Strahlmittel im Kreislauf vorzugsweise durch eine Zyklon-Abscheideeinheit mit nachgeschaltetem Luftfilter geführt wird, wobei das abgetragene Beschichtungsmaterial abgeschieden und gesammelt wird.

Je nach Zusammensetzung und vorgesehener Verwendung der gesammelten Beschichtungsmaterialien können Aussenschicht 7 und Innenschicht 11 einzeln nacheinander oder gleichzeitig abgetragen werden. Die Schichtmaterialien (mit hohem Gehalt an Graphit und Kohlenstoff-Verbindungen) sind zum Beispiel als schwimmende Abdeckung auf Metallschmelzen zwecks Desoxidation und Schlackenbildung vorzüglich geeignet.

Das Abtragen der Aussenschicht 7 - insbesondere wenn sie getrennt von der Innenschicht erfasst werden soll - kann grundsätzlich auch vor dem Trennen des Glaskolbens in Trichterteil und Frontteil durchgeführt werden, also vor der Station 22. Dies bedingt allerdings eine entsprechende Zwischenstation oder zusätzliche Transportwege (falls der Abtrag in der Station 24 vorgenommen wird).

Bei den in der Station 22 abgetrennten Frontteilen 8 muss, falls es sich um Farbbildröhren handelt, die Maske 12 aus Eisen (Fig. 1) herausgenommen werden. Zum mechanischen Abtragen und Sammeln der Leuchtschicht 9 ist gemäss Fig. 2 eine Behandlungsstation 26 vorgesehen. Es hat sich gezeigt, dass diese Schicht sich sehr vorteilhaft mittels rotierender Bürste (nicht dargestellt) von der Glasoberfläche lösen lässt, da sie relativ weich ist. Zweckmässigerweise wird die Bürste mit einer Blasdüse ergänzt, die auf die Abtragstelle gerichtet ist und vorzugsweise intermittierend arbeitet. Das abgetragene und von Luftstössen "abgehobene", pulverförmige Material wird von einer oder mehreren Saugdüsen 27 erfasst und zu einem Zyklon und/oder Luftfilter 28 geleitet und dort gesammelt.

Ein Abtragen der Schicht 9 durch selektive Strahlmitteleinwirkung ist indessen ebenfalls denkbar, wobei entsprechende Mittel und Verfahrensparameter zur Anwendung kommen wie weiter oben bei der Behandlungsstation 24 ausgeführt. Umgekehrt ist grundsätzlich auch ein Abtragen der Schichten 7 und 11 am Trichterteil 6 mittels rotierender Bürsten möglich. Im einen wie im anderen Fall - wenn für beide Teile 6 und 8 dieselben mechanischen Abtragmittel verwendet werden - können beide Teile im Prinzip in einer einzigen Behandlungsstation von den Schichten befreit werden. Allerdings wird man dann die gleichartigen Teile 6 bzw. 8 jeweils ausscheiden und zwischenlagern, um sie dann in grösseren Gruppen abwechselnd durch die Station zu führen und deren unterschiedliche Beschichtungsmaterialien separat zu sammeln.

Anhand der Figuren 3 und 4 wird nun ein Ausführungsbeispiel einer Kolben-Trennstation 22 näher beschrieben, in welcher die Bildröhrenkolben 10′ mittels geeigneten Glasschneidevorrichtungen 30 entzweigeschnitten werden. Auf einem Arbeitstisch 31 sind vorzugsweise zwei solcher Vorrichtungen 30 symmetrisch zueinander montiert. Jede Vorrichtung 30 weist einen Antriebsmotor 32 auf, der mit vertikaler Achse an einem Ständer 36 einstellbar befestigt ist und ein dünnes, diamantbeschichtetes Schneidblatt (Metallscheibe) 34 antreibt. Der Umlaufsinn der beiden Schneidblätter 34 ist gegenläufig, und die Drehzahl ist relativ hoch, z.B. etwa 10′000 pro Minute.

Zur Bearbeitung der Glaskolben 10′ in der Station 22 werden die Kolben mit ihrer Frontseite vorzugsweise auf Unterlagen 37 gesetzt, auf denen sie, mit vertikal stehender Achse 15, auf dem Tisch 31 zwischen den Vorrichtungen 30 hindurch geführt werden können. Die Unterlagen 37 sind der Flächenkrümmung der Glaskolben angepasst, und deren Höhe ist auf die (vorzugsweise ebenfalls einstellbare) Höhenlage der Schneidblätter 34 derart abgestimmt, dass der entstehende Schnitt an der gewünschten Stelle in der Ebene 16 erfolgt. Die Haftung zwischen dem Glas und der Unterlage kann mittels Saugnäpfen o. dgl. verstärkt werden. Nach zweimaligem Durchschieben jedes Kolbens mit jeweils um 90° gedrehten Stellungen sind Frontteil 8 und Trichterteil 6 mit sauberem, glattem Schnitt voneinander getrennt. Dabei können zwei Paare von Vorrichtungen 30 mit (entsprechend dem Abstand der paarweise gegenüberliegenden Rechteckseiten der Frontteile) unterschiedlichen Abstand vorgesehen sein, oder der Abstand des einen Paares von Vorrichtungen 30 wird jeweils entsprechend neu eingestellt.

In Fig. 4 ist die Situation an einer der Schneidestellen näher dargestellt. Es empfiehlt sich eine Luftkühlung mittels Blasdüsen 38 (je eine oberhalb und unterhalb des Schneidblattes 34). Der entstehende Glasstaub wird zweckmässigerweise mittels Saugdüse 39 unmittelbar an der Bearbeitungsstelle abgesaugt und in einem Luftfilter aufgefangen. Bei einer solchen Anordnung kann das Eintreten von Glasstaub in das Innere des Glaskolbens praktisch vollständig vermieden werden.

In Abwandlung der Anordnung nach Fig. 3 wäre auch eine Kolben-Trennstation 22 mit nur einer Glasschneidevorrichtung 30 möglich, wobei die Kolben auf einem Drehteller o. dgl. (nicht dargestellt) rings um ihre Achse 15 gedreht werden. Dabei kann z.B. mittels einer der rechteckähnlichen Form des Frontteils 8 angepassten, mitdrehenden Schablone eine gleichbleibende Schnitttiefe des Schneidblattes gewährleistet werden.

## Patentansprüche

1. Verfahren zum Entsorgen von Bildröhren (10), dadurch gekennzeichnet, dass, nach Demontage von ausserhalb des Glaskolbens befindlichen Bestandteilen (18, 19) und Oeffnen des Pumpstutzens (2),
- der Kolbenhals (3) mit dem Elektrodenteil (4) abgetrennt wird,
- der Glaskolben in einer zur Röhrenachse (15) senkrechten Ebene (16) in einen Frontteil (8) und einen Trichterteil (6) getrennt wird, und
- die am Frontteil (8) und am Trichterteil (6) anhaftenden Beschichtungsmaterialien (7, 9, 11) separat mechanisch abgetragen und gesammelt werden.

2. Verfahren nach Anspruch 1, dadurch gekennzeichnet, dass bei Bildröhren (10), deren Frontteil (8) und Trichterteil (6) separat hergestellt und zusammengefügt sind, die genannte Ebene (16) zum Trennen der beiden Teile (6, 8) mit deren Fügeebene in Uebereinstimmung gebracht wird.

3. Verfahren nach Anspruch 1 oder 2, dadurch gekennzeichnet, dass das Trennen von Frontteil (8) und Trichterteil (6) durch Trennschleifen in der genannten Ebene (16) erfolgt.

4. Verfahren nach Anspruch 1, dadurch gekennzeichnet, dass das Trennen von Frontteil (8) und Trichterteil (6), die mittels einer Klebeschicht (Fritte) zusammengefügt sind, durch Auflösen dieser Schicht von ausserhalb des Glaskolbens erfolgt.

5. Verfahren nach Anspruch 1, dadurch gekennzeichnet, dass das Abtragen und Sammeln von Beschichtungsmaterialien (7, 9, 11) durch selektive Strahlmittel-Beaufschlagung und Rückführung des Strahlmittel-Materialgemisches über eine Strahlmittel-Reinigungsstufe erfolgt.

6. Verfahren nach Anspruch 1, dadurch gekennzeichnet, dass das Abtragen und Sammeln von Beschichtungsmaterialien (7, 9, 11) durch trockenes Abbürsten und Absaugen des Beschichtungsmaterials erfolgt.

7. Verfahren nach Anspruch 1, dadurch gekennzeichnet, dass eine am Trichterteil (6) anhaftende Aussenschicht (7) vor dem Trennen des Glaskolbens in Frontteil (8) und Trichterteil (6) abgetragen und gesammelt wird.

8. Verfahren nach Anspruch 1, dadurch gekennzeichnet, dass der Kolbenhals (3) mit dem Elektrodenteil (4) vor oder nach dem Trennen des Glaskolbens in Frontteil (8) und Trichterteil (6) abgetrennt wird.

9. Anlage zur Durchführung des Entsorgungsverfahrens nach einem der Ansprüche 1 bis 8, gekennzeichnet durch eine Bildröhren-Demontagestation (20), eine Kolben-Trennstation (22) mit Mitteln (30) zum Trennen von Frontteil (8) und Trichterteil (6) der Bildröhrenkolben, und mindestens eine Behandlungsstation (24, 26) mit Mitteln zur getrennten mechanischen Materialabtragung an den genannten Kolbenteilen (6, 8).

10. Anlage nach Anspruch 9, dadurch gekennzeichnet, dass die Bildröhren-Demontagestation zum Abtrennen des Kolbenhalses (3) mit dem Elektrodenteil (4) eingerichtet ist.

11. Anlage nach Anspruch 9, dadurch gekennzeichnet, dass die Kolben-Trennstation (22) mindestens eine Glasschneidevorrichtung (30) aufweist.

12. Anlage nach Anspruch 11, dadurch gekennzeichnet, dass zwei Glasschneidevorrichtungen (30) einander symmetrisch gegenüberliegend angeordnet sind.

13. Anlage nach Anspruch 12, dadurch gekennzeichnet, dass die Glasschneidevorrichtungen (30) je ein rotierendes Schneidblatt (34) aufweisen, deren Achsabstand und deren Höhenlage bezüglich einer Auflagefläche (31) einstellbar sind.

14. Anlage nach Anspruch 9, dadurch gekennzeichnet, dass separate Behandlungsstationen (24, 26) für die Trichterteile (6) und die Frontteile (8) vorhanden sind.

15. Anlage nach Anspruch 9, gekennzeichnet durch mindestens eine Strahlmittel-Düsenanordnung für den mechanischen Abtrag von Beschichtungsmaterial.

16. Anlage nach Anspruch 9, gekennzeichnet durch mindestens eine rotierende Bürste mit Absauganordnung für den mechanischen Abtrag von Beschichtungsmaterial.
